# FASCICULE DE BREVET EUROPEEN

(11) **EP 3 735 379 B1**
(45) Date de publication et mention de la délivrance du brevet: **13.04.2022**
(21) Numéro de dépôt: 18711391.5
(22) Date de dépôt: 28.02.2018
(51) Int. Cl.: B64C 11/02, F02C 7/32, H02K 7/18

(54) **TURBOPROPULSEUR COMPRENANT UNE GENERATRICE D'ELECTRICITE INTEGREE**
TURBOPROP MIT INTEGRIERTEM STROMGENERATOR
TURBOPROP WITH AN INTEGRATED ELECTRIC GENERATOR

(43) Date de publication de la demande: 11.11.2020
(73) Titulaire: Safran Helicopter Engines, 64510 Bordes (FR)
(72) Inventeur: KLONOWSKI, Thomas, 77550 MOISSY-CRAMAYEL (FR); CAZAUX, David, 77550 MOISSY-CRAMAYEL (FR); LAFARGUE, Olivier, 77550 MOISSY-CRAMAYEL (FR)
(74) Mandataire: Brevalex
(86) Numéro de dépôt international: PCT/FR2018/050468
(87) Numéro de publication internationale: WO 2019/166703

(56) Documents cités:
- EP-A1- 2 977 314
- WO-A1-03/078248
- FR-A1- 3 054 265
- FR-A1- 3 057 029
- US-A- 2 488 392
- US-A1- 2014 312 722

## Description

Le sujet de l'invention présente est un turbopropulseur comprenant une génératrice d'électricité intégrée.

Les turbopropulseurs comprennent une turbine à gaz, une hélice, et un arbre d'entraînement de l'hélice qui est entraîné en temps normal par la turbine à gaz. Les aéronefs sur lesquels ces turbopropulseurs sont montés comprennent aussi divers équipements électriques qui imposent l'addition de génératrices d'électricité.

Les génératrices d'électricité des aéronefs sont généralement des accessoires montés autour de la turbine à gaz, sur des boîtes de transmission entraînées par des arbres de prise d'énergie, tournant en même temps que l'arbre principal de la turbine à gaz mais positionnés en direction radiale autour de l'axe de cette turbine. L'inconvénient de tels dispositifs est qu'ils sont assez encombrants, les boîtes de transmission étant en saillie radiale autour de la turbine à gaz. Et les équipements annexes à la génératrice (carter de protection et de support des parties actives, portion de la boîte de transmission associée à la génératrice, etc.) sont pesants.

Les documents EP 2 562 085 A2, GB 584 563 A et US 2 488 392 A décrivent des turbopropuleur où une génératrice est disposée autour de l'arbre porte-hélice et entourée par un carter ; et les documents EP 2 977 314 A1 et WO 03/078 248 A1 décrivent des turbopropulseurs où un arbre porte-hélice entoure au contraire une génératrice, un autre arbre s'étendant dans l'arbre porte-hélice.

L'objet essentiel de l'invention est d'améliorer la disposition des génératrices d'électricité sur les turbopropulseurs afin de rendre les dispositifs moins encombrants et plus légers.

Sous une forme générale, l'invention est relative à un turbopropulseur comprenant notamment une hélice, un arbre porte-hélice, une génératrice d'électricité située autour de l'arbre porte-hélice ; la génératrice est entourée par un carter appartenant au turbopropulseur et entourant l'arbre porte-hélice, et ce carter porte un stator de la génératrice ; le carter entourant la génératrice porte aussi des paliers porteurs d'un bout d'arbre, un rotor de la génératrice est porté par ce bout d'arbre ; l'invention est caractérisée en ce que le carter comprend un flasque démontable, porteur d'un desdits paliers, s'étendant perpendiculairement à l'arbre porte-hélice, et démasquant une ouverture de plus grand rayon que la génératrice dans le carter quand ledit flasque est démonté.

La construction de la génératrice à cette position se révèle très bonne, car elle n'entraîne pas d'augmentation de volume du turbopropulseur, et elle nécessite alors peu d'équipements annexes, ce qui permet de réduire la masse de l'ensemble. En effet, les parties actives de la génératrice peuvent être intégrées presque directement aux constituants existants qui entourent l'arbre porte-hélice. De plus, la bonne intégration de la génératrice améliore l'accessibilité globale aux autres accessoires du moteur.

La génératrice est soutenue avec peu d'ajout de matière, le stator étant notamment porté par une pièce existante du turbopropulseur. Et cette construction permet de monter ou d'extraire la génératrice par un mouvement en direction axiale de l'arbre porte-hélice, en démontant simplement le flasque, ce qui est facile à réaliser si le flasque est monté du côté d'épanouissement du cône.

La génératrice sera souvent logée dans une portion conique du carter d'hélice, en offrant alors d'autres possibilités d'aménagement favorable.

Pour entraîner la génératrice, on peut recourir à un convertisseur de vitesse de rotation s'étendant jusqu'à l'arbre porte-hélice et raccordé au bout d'arbre, en remarquant que ce convertisseur sera facilement construit avec un faible encombrement et un faible poids, l'arbre porte-hélice étant adjacent au rotor de la génératrice. C'est ainsi que dans une configuration plausible où la génératrice est logée entre un palier de support de l'arbre porte-hélice par le carter et une roue dentée d'entraînement dudit arbre porte-hélice par un arbre de turbine du turbopropulseur, afin de profiter d'un espace et des vides assez importants à cet endroit, un perfectionnement est obtenu si le bout d'arbre comprend une extrémité séparée du rotor par un des paliers porteurs, et un raccord du convertisseur de vitesse à ladite extrémité, le convertisseur étant alors bien intégré lui aussi, avec une construction simple et un encombrement réduit, au turbopropulseur.

Il sera généralement utile de déconnecter la génératrice à volonté, aux étapes de fonctionnement où son fonctionnement est inutile. Avantageusement, les constructions précédentes peuvent comprendre alors un système de désaccouplement entre le raccord du convertisseur de vitesse et la génératrice.

Un problème à considérer aussi est le refroidissement de la génératrice. Il pourra être résolu si elle est logée dans une enceinte contenant au moins un roulement qu'on lubrifie par une circulation d'huile, l'huile servant alors aussi à évacuer la chaleur produite par la génératrice et ses paliers. Dans d'autres constructions, il sera facile de pourvoir le carter de nervures autour de la génératrice, pour favoriser cette fois l'évacuation de chaleur par conduction à travers le carter vers l'extérieur puis par convection avec l'air frais environnant circulant autour du carter. Une autre alternative de refroidissement par échange avec le carburant moteur pourra aussi être envisagée pour absorber les réjections thermiques de la génératrice. Les composants électroniques qui permettent le pilotage de la machine électrique seront judicieusement positionnés tout autour des parties actives de celle-ci de manière à favoriser leur refroidissement.

Ces aspects, caractéristiques et avantages de l'invention, ainsi que d'autres, seront maintenant décrits au moyen des figures suivantes, qui illustrent une réalisation de l'invention non exclusives d'autres :
- la figure 1 est une vue générale du turbopropulseur; et
- la figure 2 illustre la génératrice et ses alentours.

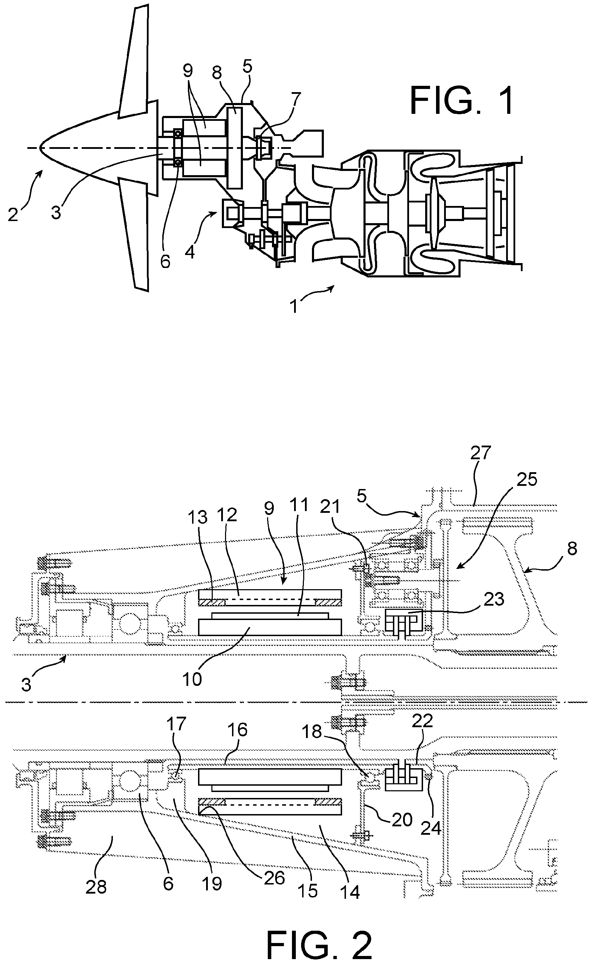

La figure 1 représente le turbopropulseur de l'invention, comprenant une turbine à gaz 1, une hélice 2, un arbre porte-hélice 3, s'étendant vers la turbine à gaz 1 et pouvant être connecté à un arbre de turbine 4, qui lui est parallèle et s'étend à peu de distance de lui, par une transmission connue et qui n'est pas représentée. L'arbre porte-hélice 3 est entouré par un carter 5 de protection. Il est soutenu dans le carter 5 par des roulements 6 et 7. L'un des roulements 6 est proche de l'hélice 2, et l'autre des roulements 7 est adjacent à une roue dentée 8 d'entraînement de l'arbre porte- hélice 3, qui engrène avec la transmission mentionnée ci-dessus. Une génératrice 9 d'électricité, caractéristique de l'invention, est disposée concentrique autour de l'arbre porte-hélice 3, entre le premier roulement 6 et la roue dentée 8, en étant entourée par le carter 5.

On passe au commentaire de la figure 2.

La génératrice 9 est annulaire et comprend un rotor 10 creux, pourvu de pôles magnétiques 11 à sa périphérie extérieure, et un stator 12 entourant le rotor 10, concentrique à lui et pourvu de bobinages 13 faisant face aux pôles magnétiques 11. La génératrice 9 est logée dans une cavité 14 entourant l'arbre porte-hélice 3, délimitée par une portion conique 15 du carter 5, entre le premier roulement 6 et la roue dentée 8. Le rotor 10 est soutenu par un bout d'arbre 16, lui-même porté par deux roulements 17 et 18 dont chacun est monté sur une cloison 19 ou 20 solidaire de la portion conique 15 et perpendiculaire à l'arbre porte-hélice 3. Toutefois, la cloison 20 plus proche de la roue dentée 8 et située du côté épanoui de la portion conique 5, est détachable du reste de la structure, étant reliée au stator 5 par des vis 21.

Le bout d'arbre 16 s'étend à peu de distance de l'arbre porte-hélice 3, auquel il est concentrique. Il comprend une extrémité 22 le prolongeant au-delà des roulements 17 et 18 vers la roue dentée 8 et qui est reliée au reste du bout d'arbre 16 par un dispositif de désaccouplement 23. L'extrémité 22 porte une denture 24 pour raccorder le bout d'arbre 16 à un convertisseur de vitesse 25, qui peut consister en une série d'engrenages qui s'étendent jusqu'à l'arbre porte-hélice 3 à proximité de la roue dentée 8 à la denture 24, de manière à entraîner le bout d'arbre 16 avec un rapport de multiplication de rotation déterminé par rapport à l'arbre porte-hélice 3. On constate que le convertisseur 25 est bien intégré à son environnement, étant de petite dimension, de même que le dispositif de désaccouplement 23. La même chose peut être dite de la génératrice 9, dont le stator 12 peut être encastré directement dans une anfractuosité circulaire 26 du carter 5. Le montage de la génératrice 9, de même que son démontage éventuel pour remplacement, est lui aussi très simple, puisqu'il suffit, après avoir démonté le carter 5 d'un élément de carter 27 voisin, de démonter le convertisseur 25, puis la cloison 20, pour retirer le bout d'arbre 16 et le rotor 10, puis le stator 12, l'ouverture démasquée par la cloison 20 étant d'un rayon supérieur.

On a représenté des nervures 28 incorporées au carter 5 et s'étendant notamment autour de la portion conique 15, et dont une fonction est d'évacuer la chaleur produite par la génératrice 9 vers l'extérieur. Le même objectif pourrait être atteint par une lubrification appropriée d'une enceinte étanche comprenant notamment la cavité 14, pour lubrifier les roulements qu'elle contient, et éventuellement les roulements 17 et 18. Réaliser une enceinte interne étanche dédiée à la machine nécessitera la mise en place de deux dispositifs d'étanchéité dynamique 29 et 30 accolés respectivement à gauche et à droite des roulements 17 et 18, c'est-à-dire que les roulements 17 et 18 s'étendent tous deux entre ces dispositifs 29 et 30. Ce dispositif pourra être de différentes technologies : joint à lèvres frottant, garniture mécanique de type bague en carbone pouvant être à portance sans contact ou, enfin labyrinthe d'étanchéité à air.

Le système de désaccouplement 23 est actionné pour rendre la génératrice 9 active seulement quand cela est requis en solidarisant à l'extrémité 22 du reste du bout d'arbre 16 pour entraîner le rotor 11 par le convertisseur 5 et l'arbre porte-hélice 3. Quant au contraire, le dispositif 23 est désaccouplé, le bout d'arbre 16 est libre et la résistance magnétique avec le stator 12 le maintient immobile.

L'arbre porte-hélice tourne typiquement à 2 000 tr/min ; on envisage de faire tourner le bout d'arbre 16 à 20 000 tr/min environ, ce qui n'impose pas de contraintes importantes pour construire le convertisseur 25. La chaleur produite par la génératrice 9 est estimée à 1 kW ou moins, pour une génération électrique de 20 kvA, et il est donc facile de la dissiper.

## Revendications

1. Turbopropulseur, comprenant une hélice, un arbre porte-hélice (3), une génératrice (9) d'électricité située autour de l'arbre porte-hélice (3),un carter (5) entourant l'arbre porte-hélice et qui entoure aussi la génératrice (9), ledit carter portant un stator (12) de la génératrice, dans lequel le carter (5) entourant la génératrice porte aussi des paliers (17, 18) porteurs d'un bout d'arbre, un rotor (10) de la génératrice étant porté par le bout d'arbre (16), **caractérisé en ce que** le carter comprend un flasque (20) démontable, porteur d'un desdits paliers (18), s'étendant perpendiculairement à l'arbre porte-hélice, et démasquant une ouverture de plus grand rayon que la génératrice dans le carter quand ledit flasque est démonté.

2. Turbopropulseur selon la revendication 1, **caractérisé en ce que** le carter (5) est conique (15) autour de la génératrice (9).

3. Turbopropulseur selon l'une quelconque des revendications 1 ou 2, **caractérisé en ce qu'**il comprend un convertisseur (25) de vitesse de rotation s'étendant jusqu'à l'arbre porte-hélice (3) et raccordé au bout d'arbre (16).

4. Turbopropulseur selon l'une quelconque des revendications 1 à 3, **caractérisé en ce que** la génératrice est logée entre un roulement (6) de support de l'arbre porte-hélice par le carter (5) et une roue dentée (8) d'entraînement dudit arbre porte-hélice (3) par un arbre de turbine (4) du turbopropulseur.

5. Turbopropulseur selon les revendications 3 et 4, **caractérisé en ce que** le bout d'arbre (16) comprend une extrémité (22) séparée du rotor (10) par un des paliers (18) porteurs du bout d'arbre, et un raccord (24) du convertisseur (25) de vitesse de rotation à ladite extrémité.

6. Turbopropulseur selon la revendication 5, **caractérisé en ce que** ladite extrémité comprend un système de désaccouplement (22) entre ledit raccord (24) et la génératrice (9).

7. Turbopropulseur selon l'une quelconque des revendications 1 à 6, **caractérisé en ce que** la génératrice est logée dans une enceinte contenant au moins un roulement et lubrifiée par circulation d'huile.

8. Turbopropulseur selon l'une quelconque des revendications 1 à 7, **caractérisé en ce que** le carter (5) est nervuré (28) autour de la génératrice (9).

## Patentansprüche

1. Turboprop-Triebwerk, bestehend aus einem Propeller, einer Propellerwelle (3), einem um die Propellerwelle (3) herum angeordneten elektrischen Generator (9), einem Gehäuse (5), das die Propellerwelle umgibt und auch den Generator (9) umgibt, wobei das Gehäuse einen Stator (12) des Generators trägt, in welchem das Gehäuse (5), das den Generator umgibt, auch Lager (17, 18) aufweist, die ein Wellenende tragen, wobei ein Rotor (10) des Generators von dem Wellenende (16) getragen wird, **dadurch gekennzeichnet, dass** das Gehäuse einen abnehmbaren Flansch (20) umfasst, der eines der Lager (18) trägt und sich von der Welle aus erstreckt und mit einer Öffnung versehen ist, die einen größeren Radius als die Generatoröffnung im Gehäuse aufweist, wenn die Flanschplatte abmontiert ist.

2. Turboprop-Triebwerk nach Anspruch 1,
**dadurch gekennzeichnet, dass** das Gehäuse (5) um den Generator (9) herum konisch (15) ist.

3. Turboprop-Triebwerk nach einem der Ansprüche 1 oder 2,
**dadurch gekennzeichnet, dass** es einen Drehzahlwandler (25) umfasst, der sich bis zur Propellerwelle (3) reicht und mit dem Wellenende (16) verbunden ist.

4. Turboprop-Triebwerk nach einem der Ansprüche 1 bis 3,
**dadurch gekennzeichnet, dass** der Generator zwischen einem Lager (6) zur Abstützung der Propellerwelle durch das Gehäuse (5) und einem Zahnrad (8) zum Antrieb der Propellerwelle (3) durch eine Turbinenwelle (4) des Turboprop-Triebwerks untergebracht ist.

5. Turboprop-Triebwerk nach den Ansprüchen 3 und 4,
**dadurch gekennzeichnet, dass** das Wellenende (16) ein Ende (22), das durch eines der das Wellenende tragenden Lager (18) vom Rotor (10) getrennt ist, und einen Anschluss (24) des Drehzahlwandlers (25) an diesem Ende aufweist.

6. Turboprop-Triebwerk nach Anspruch 5,
**dadurch gekennzeichnet, dass** das Ende des Turboprop-Triebwerks ein Entkupplungssystem (22) zwischen dem Anschluss (24) und dem Generator (9) aufweist.

7. Turboprop-Triebwerk nach einem der Ansprüche 1 bis 6,
**dadurch gekennzeichnet, dass** der Generator in einem Gehäuse untergebracht ist, das mindestens ein Lager enthält und durch Ölzirkulation geschmiert wird.

8. Turboprop-Triebwerk nach einem der Ansprüche 1 bis 7,
**dadurch gekennzeichnet, dass** das Gehäuse (5) um den Generator (9) herum gerippt (28) ist.

## Claims

1. Turboprop, comprising a propeller, a propeller support shaft (3), an electricity generator (9) located around the propeller support shaft (3), a casing (5) surrounding the propeller support shaft and that also surrounds the generator (9), said casing carrying a stator (12) of the generator, wherein the casing (5) surrounding the generator also carries support bearings (17, 18) of a shaft end, a rotor (10) of the generator being supported by the shaft end (16), **characterised in that** the casing comprises a removable plate (20) that carries one of said bearings (18), extending perpendicular to the propeller support shaft, and exposing an opening with a larger radius that the generator in the casing when said end plate is removed.

2. Turboprop according to claim 1, **characterised in that** the casing (5) is conical (15) around the generator (9).

3. Turboprop according to claim 1 or claim 2, **characterised in that** it comprises a rotation speed converter (25) extending as far as the propeller support shaft (3) and connected to the shaft end (16).

4. Turboprop according to any one of claims 1 to 3, **characterised in that** the generator is housed between a support roller bearing (6) of the propeller support shaft by the casing (5) and a toothed wheel (8) driving said propeller support shaft (3) by a turbine shaft (4) of the turboprop.

5. Turboprop according to claims 3 and 4, **characterised in that** the shaft end (16) comprises an end (22) separated from the rotor (10) by bearings (18) supporting the shaft end, and a connector (24) of the rotation speed converter (25) at said end.

6. Turboprop according to claim 5, **characterised in that** said end comprises a system (22) to decouple said connector (24) from the generator (9).

7. Turboprop according to any one of claims 1 to 6, **characterised in that** the generator is housed in a chamber containing at least one roller bearing lubricated by oil circulation.

8. Turboprop according to any one of claims 1 to 7, **characterised in that** the casing (5) is ribbed (28) around the generator (9).
